# EUROPEAN PATENT APPLICATION

(11) **EP 4 749 732 A1**
(43) Date of publication of application: **27.05.2026**
(21) Application number: 24869666.8
(22) Date of filing: 15.04.2024
(51) Int. Cl.: H01M 10/04, H01M 50/466

(54) **ELECTRODE ASSEMBLY, BATTERY CELL, BATTERY, AND ELECTRICAL DEVICE**

(30) Priority: 28.09.2023 CN 202311279494
(71) Applicant: Contemporary Amperex Technology Co., Limited, Ningde, Fujian 352100 (CN)
(72) Inventor: LUO, Zhongping, Ningde, Fujian 352100 (CN); WANG, Song, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN); KONG, Pan, Ningde, Fujian 352100 (CN)
(74) Representative: Ziebig Hengelhaupt Intellectual Property Attorneys Patentanwaltskanzlei PartGmbB
(86) International application number: PCT/CN2024/087728
(87) International publication number: WO 2025/066097

(57) **Abstract**

Embodiments of the present application are applicable to the technical field of power batteries and provide an electrode assembly (100), a battery cell (200), a battery (300), and an electrical apparatus (400). The electrode assembly includes: an electrode plate (10) including an electrode plate body (11) and a tab region (12); and separators (20) disposed on two opposite sides of the electrode plate along a thickness direction of the electrode plate, where the separators each include a covering portion (21) covering the electrode plate body and an exceeding portion (22) connected to the covering portion, the exceeding portion covering a portion of the tab region, where the exceeding portions on the two opposite sides of the electrode plate are at least partially connected to each other and form a bonding portion (31), or the exceeding portions on the two opposite sides of the electrode plate are at least partially connected to the tab region and form the bonding portion. The electrode assembly provided in the present application enables two separators to envelop the electrode plate in the width direction of the electrode plate. Consequently, even if the separators fold, the electrode plate will not be exposed to the outside, so as to reduce the occurrence of contact between two adjacent electrode plates caused by separator folding, thereby improving the yield rate of the battery.

## Description

The present application claims priority to Chinese Patent Application No. 202311279494.7, entitled "ELECTRODE ASSEMBLY, BATTERY CELL, BATTERY, AND ELECTRICAL APPARATUS", filed with the China National Intellectual Property Administration on September 28, 2023, the entire content of which is incorporated herein by reference.

### TECHNICAL FIELD

The present application relates to the technical field of power batteries, and in particular, to an electrode assembly, a battery cell, a battery, and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, battery technology is an important factor related to their development.

In the structure of a battery, the battery cell is an important component, and the winding formation process of the battery cell is a crucial step. During the winding process of the battery cell, abnormal situations such as folding of the separators often occur. Separator folding can easily cause contact and short circuits between adjacent electrode plates, leading to battery cell failures and affecting the yield rate of battery cells.

### SUMMARY OF THE INVENTION

In view of the above problems, the present application provides an electrode assembly, a battery cell, a battery, and an electrical apparatus, which can reduce the occurrence of battery cell failures caused by separator folding.

In a first aspect, some embodiments of the present application provide an electrode assembly, including:
an electrode plate comprising an electrode plate body and a tab region; and
separators disposed on two opposite sides of the electrode plate along a thickness direction of the electrode plate, where the separators each include a covering portion covering the electrode plate body and an exceeding portion connected to the covering portion, the exceeding portion covering a portion of the tab region, where
the exceeding portions on the two opposite sides of the electrode plate are at least partially connected to each other and form a bonding portion, or the exceeding portions on the two opposite sides of the electrode plate are at least partially connected to the tab region and form the bonding portion.

In the technical solution of this embodiment, both sides of the electrode plate are provided with separators, and the separators each include a covering portion covering the electrode plate body and an exceeding portion formed by extending beyond the electrode plate. Thereafter, the exceeding portions on both sides of the electrode plate are connected and form a bonding portion, or the two exceeding portions are both connected to the tab region and form the bonding portion, such that the two separators can envelop the electrode plate in the width direction of the electrode plate or be connected to the tab. Consequently, even if the separators fold, the electrode plate will not be exposed to the outside, so as to reduce the occurrence of contact between two adjacent electrode plates caused by separator folding, thereby improving the yield rate of the battery.

In some embodiments, in a width direction of the electrode plate, both sides of the covering portion are provided with the exceeding portions, and the two opposite sides of the electrode plate are both provided with the bonding portions.

In the technical solution of this embodiment, both sides of the covering portion in the width direction of the electrode plate are provided with the exceeding portions, such that bonding portions are formed on both sides of the electrode plate in the width direction. In this way, the two separators form a pocket-like structure to accommodate the electrode plate, and the electrode plate is enveloped between the two separators and thus is not easily exposed to the outside. Consequently, even if the separators fold, the electrode plate is less likely to contact an adjacent electrode plate and cause a short circuit, thereby further improving the yield rate of the battery.

In some embodiments, in a width direction of the electrode plate, the dimension of the bonding portion is less than or equal to the dimension of the exceeding portion.

Since the bonding portion is formed by connecting two exceeding portions, and the main function of the bonding portion is to connect the two separators to enable the two separators to better envelop the electrode plate, in the technical solution of this embodiment, the dimension of the bonding portion in the width direction of the electrode plate is made less than or equal to the dimension of the exceeding portion, so as to reduce the occurrence of the situation where the two exceeding portions cover a portion of the electrode plate during bonding, thereby reducing the negative impact on the electrode plate during the process of bonding the exceeding portions to form the bonding portion, which further improves the yield rate of the battery.

In some embodiments, in the width direction of the electrode plate, the dimension of the exceeding portion is in a range of 2 mm to 20 mm.

The technical solution of this embodiment provides some specific dimension parameters for the exceeding portion. In the width direction of the electrode plate, this dimension range of the exceeding portion enables the two exceeding portions to have sufficient length to extend beyond the electrode plate and to be bonded to form a bonding portion; meanwhile, this dimension range can also reduce the occurrence of the situation where the exceeding portions cover the electrode plate during the bonding process, thereby reducing the negative impact on the electrode plate during the process of bonding the exceeding portions to form the bonding portion.

In some embodiments, in the width direction of the electrode plate, the dimension of the bonding portion is in a range of 2 mm to 20 mm.

The technical solution of this embodiment provides some specific dimension parameters for the bonding portion. In the width direction of the electrode plate, this dimension range of the bonding portion enables the bonding portion to be relatively robust without rupturing under pressure during the winding process, and also enables the separators to still envelop the electrode plate when the separators fold, which improves the stability of enveloping the electrode plate by the separators, thereby improving the yield rate of the battery.

In some embodiments, the covering portion is attached to the electrode plate, or a gap exists between the covering portion and the electrode plate.

To prevent the separators from detaching from the electrode plate, it is typically necessary to laminate the electrode plate and the separators. The lamination process of the electrode plate and the separators typically requires rolling by a pressure roller. After being rolled, the separators risk a reduction in air permeability, while the reduction in air permeability will lead to a reduction in the ion transmission efficiency of the separators. Accordingly, the technical solution of this embodiment makes the separators attached to the electrode plate or have a gap existing with the electrode plate. Because the separators on both sides of the electrode plate are connected at both sides in the width direction of the electrode plate via the bonding portion, the separators can be connected to the electrode plate through the bonding portion without occurrence of detachment of the separators. Therefore, it is not necessary to further laminate the separators with the electrode plate, thereby alleviating the situation of reduction in air permeability of the separators caused by lamination.

In some embodiments, air permeability of the covering portion is in a range of 100 s/cc to 300 s/cc.

The technical solution of this embodiment provides some specific parameters for the air permeability of the covering portion. This air permeability range of the covering portion enables the separator to have a high ion transmission efficiency at the covering portion, thereby improving the performance of the battery.

In some embodiments, in a length direction of the electrode plate, the dimension of the bonding portion is less than or equal to the dimension of the exceeding portion.

Since the function of the bonding portion is to fix the exceeding portions of the two separators on one side of the electrode plate, such that the separators are not easily detached from the electrode plate, so as to reduce the occurrence of the electrode plate being exposed to the outside and contacting an adjacent electrode plate. Accordingly, the technical solution of this embodiment provides some dimension ranges for the bonding portion. When the dimension of the bonding portion in the length direction of the electrode plate is equal to the dimension of the exceeding portion, the exceeding portions of the two separators are completely connected; when the dimension of the bonding portion in the length direction of the electrode plate is less than the dimension of the exceeding portion, an unconnected opening exists between the exceeding portions of the two separators, such that the electrolyte solution can more easily enter between the two separators through this opening. That is, the dimension of the bonding portion in the length direction of the electrode plate being less than the dimension of the exceeding portion can improve the wettability of the electrode plate and the separators, thereby improving the performance of the battery.

In some embodiments, one side of the electrode plate is provided with at least two bonding portions arranged at intervals along the length direction of the electrode plate, and a spacing space is formed between the two bonding portions, where
in the thickness direction of the electrode plate, the spacing space is also formed between two exceeding portions on both sides of the electrode plate.

The technical solution of this embodiment provides some specific structures where the dimension of the bonding portion in the length direction of the electrode plate is less than the dimension of the exceeding portion. At least two bonding portions are provided, and the bonding portions are arranged at intervals to form a spacing space between the bonding portions, and this spacing space is also formed between the two exceeding portions. This spacing space can serve as an opening between the two separators to improve the wettability of the electrode plate; as the number of bonding portions increases, the number of spacing spaces correspondingly increases and they are arranged at intervals along the length direction of the electrode plate, thereby enabling the electrolyte solution to enter between the two separators more smoothly and uniformly, so as to further improve the wettability of the electrode plate and the separators, thereby further improving the performance of the battery.

In some embodiments, in the length direction of the electrode plate, the dimension of the bonding portion is greater than or equal to 2 mm, and the dimension of the spacing space is in a range of 2 mm to 100 mm.

The technical solution of this embodiment provides some dimensions for the bonding portion and the spacing space in the length direction of the electrode plate, which enables the two exceeding portions to be stably connected at the bonding portion, and also enables the electrolyte solution to more easily enter between the two separators through the spacing space. Meanwhile, the dimension range of the spacing space can also reduce the impact of the spacing space on the stability of the bonding portion, thereby enabling the exceeding portions to be stably connected at the bonding portion without being prone to rupture.

In some embodiments, one side of the electrode plate body is provided with at least two tab regions, and the at least two tab regions are arranged at intervals along the length direction of the electrode plate.

The technical solution of this embodiment provides some arrangement manners for the tab regions. At least two tabs are arranged at intervals along the length direction of the electrode plate, which enable the exceeding portions to be either connected to each other and form a bonding portion, or enable the exceeding portions to be connected to the tab region and form a bonding portion, so as to fix the exceeding portions, thereby making it less likely for the electrode plate to be exposed due to folding of the separators.

In some embodiments, in the length direction of the electrode plate, a length of the tab region is the same as a length of the electrode plate body.

The technical solution of this embodiment provides some other arrangement manners for the tab regions. The dimension of the tab region in the length direction of the electrode plate is made the same as the dimension of the electrode plate body in the length direction of the electrode plate, enabling the exceeding portions to be connected to the tab regions and form bonding portions, so as to fix the exceeding portions, thereby making it less likely for the electrode plate to be exposed due to folding of the separators.

In some embodiments, in the width direction of the electrode plate, a ratio of the dimension of the exceeding portion to the dimension of the tab region is in a range of 1:3 to 2:3.

The technical solution of this embodiment provides a relationship between the tab region and the exceeding portion. Within this dimension range, the exceeding portion not only has a strong adhesion force but can also reduce the impact of the separator on the connection of the tab region to other structures.

In some embodiments, in the width direction of the electrode plate, a difference between the dimension of the tab region and the dimension of the exceeding portion is in a range of 1 mm to 40 mm.

The technical solution of this embodiment provides a dimension range for the portion of the tab region that extends beyond the separator, so as to facilitate the connection of the tab region to other structures, thereby reducing the potential negative impact of the separator on the connection stability of the tab region.

In some embodiments, a connection pattern is formed on the bonding portion, and the exceeding portions on the two opposite sides of the electrode plate are connected at the connection pattern.

The technical solution of this embodiment provides some methods for connecting the exceeding portions, so as to enable the two exceeding portions to be connected through the connection pattern and bonded to form the bonding portion. This arrangement can enable the exceeding portions to have high stability at the connection pattern and make them less susceptible to detachment at the connection pattern due to external influences, thereby reducing risks such as short circuits that may result from the electrode plate being exposed to the outside.

In some embodiments, the connection pattern includes a curved pattern or a polyline-shaped pattern.

When the direction of force applied to the exceeding portions at the connection pattern is consistent with the extension direction of the connection pattern, the exceeding portions are more likely to detach from each other or rupture. Conversely, when the direction of force applied to the exceeding portions at the connection pattern differs from the extension direction of the connection pattern, the connection pattern can better connect the two exceeding portions. Accordingly, the technical solution of this embodiment provides some shapes of the connection pattern. The connection pattern is made curved or polyline-shaped, meaning that the connection pattern has multiple different extension directions. Since the direction of external force applied to the exceeding portions is typically relatively singular and unlikely to be consistent with the shape of the connection pattern, this arrangement can enhance the connection capability of the connection pattern and improve the stability of the bonding portion.

In some embodiments, the electrode plate is a positive electrode plate and/or a negative electrode plate.

In the technical solution of this embodiment, the structures of the separator and the bonding portion can be applied to either the positive electrode plate or the negative electrode plate, or simultaneously to both the positive and negative electrode plates, so as to further reduce risks such as short circuits that may be caused by folding of the separators.

In a second aspect, some embodiments of the present application further provide a battery cell, including the electrode assembly provided in some embodiments of the first aspect.

In a third aspect, some embodiments of the present application further provide a battery, including the electrode assembly provided in some embodiments of the first aspect, or the battery cell provided in some embodiments of the second aspect.

In a fourth aspect, some embodiments of the present application further provide an electrical apparatus, including the electrode assembly provided in some embodiments of the first aspect, or the battery cell provided in some embodiments of the second aspect, or the battery provided in some embodiments of the third aspect.

The foregoing description is merely an overview of the technical solutions in the present application. In order that technical means of the present application can be understood more clearly so that the technical means can be implemented according to content of the specification, and in order that the foregoing and other objectives, features, and advantages of the present application can be understood more clearly, specific embodiments of the present application are described below.

### BRIEF DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. In addition, throughout the accompanying drawings, the same reference numeral is used to represent the same component. In the accompanying drawings:
FIG. 1 is a schematic structural diagram of an electrical apparatus provided in some embodiments of the present application.
FIG. 2 is an exploded schematic structural diagram of a battery provided in some embodiments of the present application.
FIG. 3 is an exploded schematic structural diagram of a battery cell provided in some embodiments of the present application.
FIG. 4 is a schematic structural diagram of an electrode assembly provided in some embodiments of the present application.
FIG. 5 is a schematic cross-sectional view taken at A-A in FIG. 4.
FIG. 6 is a schematic cross-sectional view taken at B-B in FIG. 4.
FIG. 7 is a schematic cross-sectional view taken at C-C in FIG. 4.
FIG. 8 is a schematic structural diagram of an electrode assembly provided in some embodiments of the present application.
FIG. 9 is a schematic structural diagram of bonding portions being arranged at intervals in an electrode assembly provided in some embodiments of the present application.
FIG. 10 to FIG. 14 are schematic structural diagrams of different connection patterns in an electrode assembly provided in some embodiments of the present application.
FIG. 15 and FIG. 16 are schematic structural diagrams of an electrode assembly provided in some embodiments of the present application.
FIG. 17 is a schematic cross-sectional view of a battery cell provided in some embodiments of the present application.
FIG. 18 is an exploded schematic structural diagram of a battery cell provided in some embodiments of the present application.
FIG. 19 is an exploded schematic structural diagram of a battery provided in some embodiments of the present application.

The meanings of the reference numerals in the drawings are as follows:
100: electrode assembly;
10: electrode plate; 11: electrode plate body; 12: tab region;
20: separator; 21: covering portion; 22: exceeding portion;
31: bonding portion; 311: connection pattern; 32: spacing space;
200: battery cell;
40: case;
50: end cover;
300: battery;
60: box body; 61: first portion; 62: second portion;
400: electrical apparatus;
70: controller; 80: motor.

### DETAILED DESCRIPTION

The embodiments of the technical solution of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF

### DESCRIPTION OF DRAWINGS are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the market demand is also constantly expanding.

In the structure of a battery, the electrode assembly is an important component, and the winding or stacking formation process of the electrode assembly is a crucial step. In current electrode assemblies, the areas of the separator and the electrode plate are mostly identical or substantially the same. During the winding or stacking process of the electrode assembly, the separator is prone to abnormal situations such as folding. This makes it easy for the electrode plate to become exposed when the separator folds. One of the functions of the separator is to separate adjacent positive and negative electrode plates to reduce occurrence of situations such as short circuits caused by contact between the positive and negative electrode plates, thereby reducing electrode assembly failures and minimizing negative impacts on the yield rate of the electrode assembly.

To mitigate the situation where separator folding may lead to exposure of the electrode plate, an embodiment of the present application provides an electrode assembly. By configuring separators on both sides of the electrode plate to extend beyond the electrode plate and form exceeding portions, and bonding the two exceeding portions to form a bonding portion, the bonding portion can cooperate with the two separators to envelop the electrode plate.

In such an electrode assembly, since the two separators envelop one end of the electrode plate that is adjacent to the bonding portion via the bonding portion, it is equivalent to the two separators being bonded together through the bonding portion to form a separator sleeve sleeved outside the electrode plate, and this separator sleeve is closed at the bonding portion. In this case, folding of the separators will not lead to exposure of the electrode plate, and the electrode plate is also less likely to move to the outside of the separators on the side having the bonding portion, which reduces occurrence of situations of contact and short circuits of the electrode plate with adjacent electrode plates due to exposure to the outside of the separators, thereby improving the yield rate of the battery.

The battery cell disclosed in the embodiments of the present application can be used in an electrical apparatus that uses a battery as the power source or in various energy storage systems that use batteries as energy storage elements. The electrical apparatus may be, but is not limited to, a mobile phone, a tablet, a laptop, an electric toy, an electric tool, a battery vehicle, an electric vehicle, a ship, a spacecraft, and the like. Among them, the electric toy may include a fixed or mobile electric toy, such as a game console, an electric vehicle toy, an electric ship toy, an electric airplane toy, and the like. The spacecraft may include an airplane, a rocket, a space shuttle, a spaceship, and the like.

The following embodiments, for the convenience of illustration, take an electrical apparatus 400 being a vehicle in one embodiment of the present application as an example to illustrate.

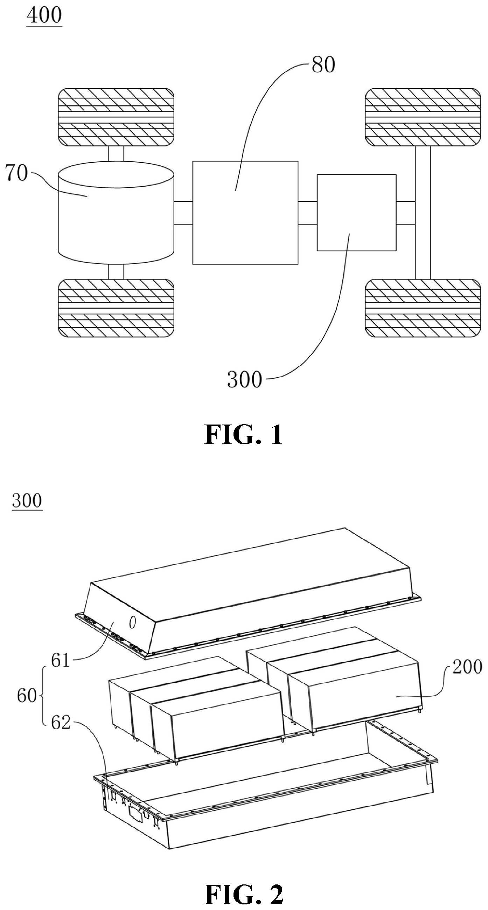

Reference is made to FIG. 1, where FIG. 1 is a schematic structural diagram of a vehicle provided in some embodiments of the present application. The vehicle may be a fuel vehicle, a gas vehicle, or a new energy vehicle, and the new energy vehicle may be an all-electric vehicle, a hybrid vehicle, or an extended-range electric vehicle, or the like. The interior of the vehicle is provided with a battery 300, and the battery 300 may be provided at the bottom or head or tail of the vehicle. The battery 300 may be configured to supply power to the vehicle. For example, the battery 300 may be used as an operating power source of the vehicle. The vehicle may further include a controller 70 and a motor 80. The controller 70 is configured to control the battery 300 to supply power to the motor 80, for example, for meeting operating power demands when the vehicle is starting, navigating, and traveling.

In some embodiments of the present application, the battery 300 can not only serve as an operating power source of the vehicle, but also serve as a driving power source of the vehicle, thus replacing or partially replacing fuel or natural gas to provide driving power for the vehicle.

Reference is made to FIG. 2, where FIG. 2 is an exploded view of the battery 300 according to some embodiments of the present application. The battery 300 includes a box body 60 and a battery cell 200, where the battery cell 200 is accommodated within the box body 60. Here, the box body 60 is configured to provide an accommodating space for the battery cell 200, and the box body 60 can be of various structures. In some embodiments, the box body 60 may include a first portion and a second portion, the first portion and the second portion covering each other, and the first portion and the second portion together defining the accommodating space for accommodating the battery cell 200. The second portion may be of a hollow structure with an opening at one end, and the first portion may be of a plate-like structure, where the first portion covers the opening side of the second portion such that the first portion and the second portion together define the accommodating space. The first portion and the second portion may each be of a hollow structure with an opening at one end, where the opening side of the first portion covers the opening side of the second portion. Of course, the box body 60 formed by the first portion and the second portion may be of a variety of shapes, such as a cylinder and a rectangular solid.

In the battery 300, there may be a plurality of battery cells 200, and the plurality of battery cells 200 may be connected in series or in parallel or in series-parallel connection, where the series-parallel connection means that the plurality of battery cells 200 are connected in both series and parallel. A plurality of battery cells 200 may be directly connected together in series, parallel, or series-parallel connection, and then the entirety constituted by the plurality of battery cells 200 is accommodated within the box body 60. Certainly, the battery 300 can also be formed by first connecting a plurality of battery cells 200 in series, in parallel, or in series-parallel connection to constitute battery 300 modules, and then connecting a plurality of battery 300 modules in series, in parallel, or in series-parallel connection to form an entirety, which is accommodated within the box body 60. The battery 300 may further include other structures. For example, the battery 300 may further include a busbar component configured to achieve electrical connections between the plurality of battery cells 200.

Each battery cell 200 may be a secondary battery or a primary battery; or it may be a lithiumsulfur battery, a sodium-ion battery or a magnesium-ion battery, but is not limited thereto. The battery cells 200 may be cylindrical, flat, rectangular, or in other shapes.

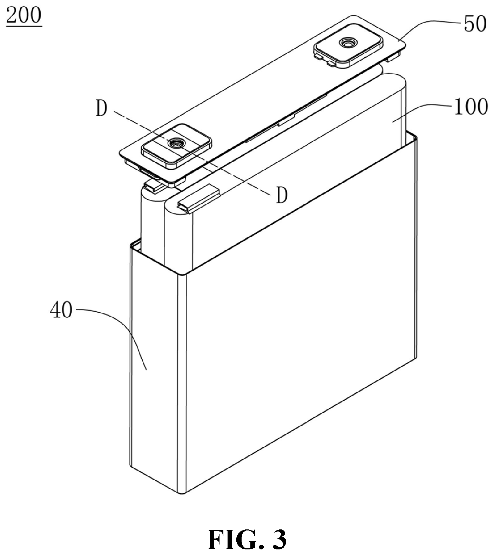

Reference is made to FIG. 3, where FIG. 3 is a schematic exploded structural diagram of a battery cell 200 provided in some embodiments of the present application. A battery cell 200 is the smallest unit that makes up the battery 300. As shown in the figure, the battery cell 200 includes an end cover 50, a case 40, an electrode assembly 100, and other functional components.

The end cover 50 is a component that covers an opening of the case 40 to isolate an internal environment of the battery cell 200 from an external environment. Without limitation, the shape of the end cover 50 may be adapted to the shape of the case 40 to fit the case 40. Optionally, the end cover 50 can be made of a material (such as aluminum alloy) with a certain hardness and strength, so that the end cover 50 is less likely to deform when subjected to extrusion and collision, which allows the battery cell 200 to have a higher structural strength and improved safety performance. The end cover 50 can be provided with functional components such as electrode terminals. The electrode terminal can be used for electrical connection with the electrode assembly 100 for use in outputting or inputting electrical energy from or to the battery cell 200. In some embodiments, the end cover 50 may also be provided with a pressure relief mechanism for releasing the internal pressure when the internal pressure or temperature of the battery cell 200 reaches a threshold value. The end cover 50 may also be made of a variety of materials, such as copper, iron, aluminum, stainless steel, aluminum alloy, plastic, etc., and the embodiments of the present application are not particularly limited in this regard. In some embodiments, an insulating member may also be provided on the inner side of the end cover 50, and the insulating member can be configured to isolate the electrical connection components inside the case 40 from the end cover 50 to reduce the risk of short circuits. As an example, the insulating member may be made of plastic, rubber, and the like.

The case 40 is an assembly for fitting the end cover 50 to form the internal environment of the battery cell 200, wherein the formed internal environment can be configured to accommodate the electrode assembly 100, electrolyte solution, and other components. The case 40 and the end cover 50 may be separate components, and an opening may be provided in the case 40, and the internal environment of the battery cell 200 may be formed by making the end cover 50 cover the opening at the opening. Without limitation, the end cover 50 and the case 40 may also be integrated. Specifically, the end cover 50 and the case 40 may form a common connection surface before other components enter the case. When an interior of the case 40 needs to be encapsulated, the case 40 is covered with the end cover 50. The case 40 may be of various shapes and dimensions, such as a rectangular solid, a cylinder, and a hexagonal prism. Specifically, the shape of the case 40 may be determined based on the specific shape and dimension of the electrode assembly 100. The case 40 may be made of various materials, such as copper, iron, aluminum, stainless steel, aluminum alloy, and plastic, which is not particularly limited in the embodiments of the present application.

The electrode assembly 100 is a component where electrochemical reactions occur within the battery cell 200. The case 40 may contain one or more electrode assemblies 100 inside. The electrode assembly 100 is primarily formed by winding or stacking a positive electrode plate and a negative electrode plate, with a separator 20 typically provided between the positive electrode plate and the negative electrode plate. The portions of the positive electrode plate and the negative electrode plate that have active materials constitute an electrode plate body 11 of the electrode assembly 100, and the portions of the positive electrode plate and the negative electrode plate that do not have active materials each constitute a tab region 12. The positive tab region and the negative tab region may be collectively located at one end of the electrode plate body 11 or separately located at two ends of the electrode plate body 11. During the charging and discharging process of the battery 300, the positive electrode active material and the negative electrode active material react with the electrolyte solution, and the tab region 12 is connected to the electrode terminal to form a current loop.

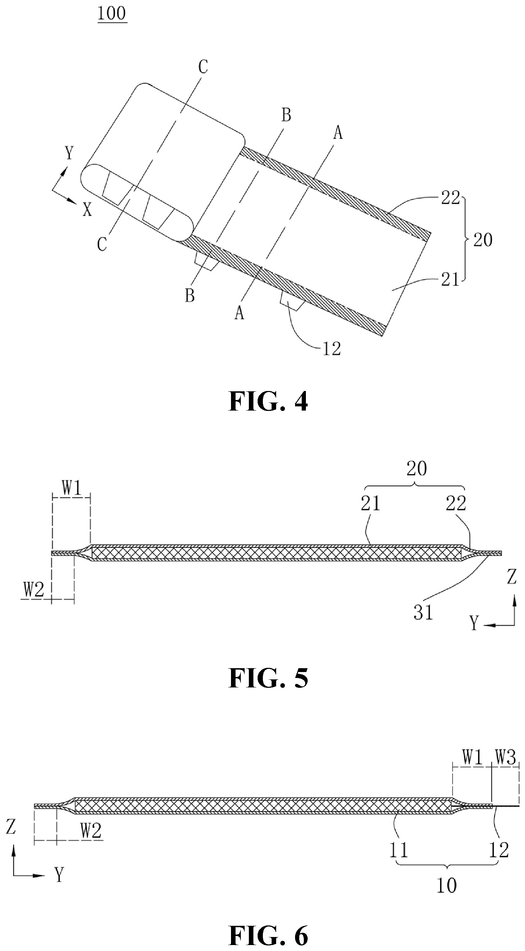

According to some embodiments of the present application, reference is made to FIG. 4 and FIG. 5, where FIG. 4 is a schematic structural diagram of an electrode assembly 100 provided in some embodiments of the present application, and FIG. 5 is a schematic cross-sectional view taken along A-A in FIG. 4.

The direction of the X-axis in the figures indicates the length direction of the electrode plate 10, the direction of the Y-axis indicates the width direction of the electrode plate 10, and the direction of the Z-axis indicates the thickness direction of the electrode plate 10.

Embodiments of the present application provide an electrode assembly 100, including an electrode plate 10 and separators 20. The electrode plate 10 includes an electrode plate body 11 and a tab region 12; and the separators 20 are disposed on two opposite sides of the electrode plate 10 along a thickness direction of the electrode plate 10, where the separators 20 each include a covering portion 21 covering the electrode plate 10 and an exceeding portion 22 connected to the covering portion 21, the exceeding portion 22 covering a portion of the tab region 12, where the exceeding portions 22 on the two opposite sides of the electrode plate 10 are at least partially connected to each other and form a bonding portion 31, or the exceeding portions 22 on the two opposite sides of the electrode plate 10 are at least partially connected to the tab region 12 and form the bonding portion 31.

The separator 20 refers to an insulating membrane structure having a porous structure. The separator 20 is an important component of the battery 300. The separator 20 is typically disposed between two adjacent electrode plates 10 to separate the two adjacent electrode plates 10 and reduce the occurrence of short circuits caused by contact between the electrode plates 10 of the electrode assembly 100. The interior of the separator 20 of the battery 300 typically has nanoscale channels, allowing lithium ions and other ions to freely pass through during charging and discharging, thereby providing pathways for transmission of ions between the electrode plates 10.

The separator 20 includes a covering portion 21 and an exceeding portion 22. In addition to the covering portion 21 and the exceeding portion 22, other structures may also be connected or defined on the separator 20.

The covering portion 21 refers to the portion of the separator 20 that opposes the electrode plate 10. For example, the portion covered by the projection of the electrode plate 10 onto the separator 20 may be defined as the covering portion 21, or the covering portion 21 may be defined or formed by other means such that the covering portion 21 opposes the electrode plate 10. The shape of the covering portion 21 may be rectangular or other shapes. Depending on the covering function, the shape of the covering portion 21 may be the same as that of the electrode plate 10.

The exceeding portion 22 refers to the portion of the separator 20 that exceeds the electrode plate 10. Specifically, the projection of the exceeding portion 22 along the thickness direction (Z) of the electrode plate 10 onto the electrode plate 10 falls outside the electrode plate 10. The exceeding portion 22 may extend from the covering portion 21 beyond the electrode plate 10 along the width direction Y of the electrode plate 10, or the exceeding portion 22 may extend from the covering portion 21 beyond the electrode plate 10 along the length direction X of the electrode plate 10. The shape of the exceeding portion 22 may be rectangular, or may be triangular, trapezoidal, or other shapes.

The exceeding portion 22 is connected to the covering portion 21. Specifically, the exceeding portion 22 may be integrally formed with the covering portion 21, meaning that both the exceeding portion 22 and the covering portion 21 are portions defined on the separator 20. Alternatively, the exceeding portion 22 may be connected to the covering portion 21 by welding, adhesion, or other means.

Since the electrode assembly 100 is mainly formed by placing electrode plates 10, in a winding or stacking manner, and an electrode plate 10 is typically adjacent to another electrode plate 10 in the width direction, the separators 20 are disposed on two opposite sides of the electrode plate 10 along the thickness direction of the electrode plate 10 to separate the electrode plate 10 from an adjacent electrode plate 10, thereby reducing contact between adjacent electrode plates 10. Specifically, the covering portion 21 of the separator 20 opposes the electrode plate 10, and its main function is to reduce contact between the electrode plate 10 and an adjacent electrode plate 10 in the thickness direction, thereby reducing the occurrence of short circuits between electrode plates 10.

An accommodating space for accommodating the electrode plate 10 is formed between two covering portions 21. The covering portion 21 may be connected to the electrode plate 10; for example, the covering portion 21 may be attached to the electrode plate 10 or adhered to the electrode plate 10, or alternatively, a gap may exist between the covering portion and the electrode plate 10.

The exceeding portion 22 extends from the covering portion 21 beyond the electrode plate 10, and two exceeding portions 22 on both sides of the electrode plate 10 in the thickness direction may be at least partially connected to each other on one side of the electrode plate 10 and form a bonding portion 31. The bonding portion 31 can form a blocking structure on the corresponding side of the accommodating space, making it difficult for the electrode plate 10 to be exposed to the outside from this side. Consequently, even if the separators 20 fold or exhibit other situations, due to the blocking of the bonding portion 31, the electrode plate 10 is less likely to be exposed to the outside and contact an adjacent electrode plate 10, thereby reducing the occurrence of short circuits between electrode plates 10. The connection between the two exceeding portions 22 may be achieved by welding, rolling, adhesion, or other means.

Alternatively, the two exceeding portions 22 on both sides of the electrode plate 10 in the thickness direction may be at least partially connected to the tab region 12 on one side of the electrode plate 10 and form a bonding portion 31. In this case, the bonding portion 31 can also form a blocking structure on the corresponding side of the accommodating space to prevent the electrode plate 10 from being exposed to the outside.

Since the tab region 12 also needs to be connected to the electrode terminal, the exceeding portion 22 should not completely cover the tab region 12. That is, the exceeding portion 22 only covers a portion of the tab region 12, thereby leaving space on the tab region 12 such that the tab region 12 can be connected to the electrode terminal, reducing the negative impact caused by the exceeding portion 22 on the connection between the tab region 12 and the electrode terminal.

The bonding portion 31 may be provided on any one side or both sides of the electrode plate 10 in the width direction, and the bonding portion 31 may also be provided on any one side or both sides of the electrode plate 10 in the length direction. The position of the bonding portion 31 may be determined according to the actual situation of the winding process of the electrode plate 10. For example, if the separator 20 on a certain side is prone to folding during the winding process of the electrode plate 10, the bonding portion 31 may be provided on that side.

The two exceeding portions 22 on one side of the electrode plate 10 may be completely connected, or may be partially connected and leave a gap. In the length direction or the width direction of the electrode plate 10, the bonding portion 31 formed by the connected portions of the two exceeding portions 22 of the electrode plate can block the electrode plate 10 from moving relative to the separator 20 to the outside of the accommodating space. That is, the bonding portion 31 can block the electrode plate 10 from being exposed to the outside and contacting an adjacent electrode plate, thereby preventing situations such as short circuits.

The bonding portion 31 cooperates with the two covering portions 21 to envelop one end of the electrode plate 10 that is adjacent to the bonding portion 31. This is equivalent to the two separators 20 being bonded together through the bonding portion 31 to form a separator sleeve sleeved outside the electrode plate 10. In this case, folding of the separators 20 will not lead to exposure of the electrode plate 10, and the electrode plate 10 is also less likely to move to the outside of the separators 20 on the side having the bonding portion 31, which reduces occurrence of situations of contact and short circuits of the electrode plate 10 with adjacent electrode plates 10 due to exposure to the outside of the separators 20, thereby improving the yield rate of the battery 300.

In this embodiment, both sides of the electrode plate 10 are provided with the separators 20, and the separators 20 each include a covering portion 21 covering the electrode plate 10 and an exceeding portion 22 formed by extending beyond the electrode plate 10. Thereafter, the exceeding portions 22 on both sides of the electrode plate 10 are bonded and form a bonding portion 31, such that the bonding portion 31 can cooperate with the two separators 20 to envelop one end of the electrode plate 10 that is adjacent to the bonding portion 31. This is equivalent to the two separators 20 being bonded together through the bonding portion 31 to form a separator sleeve sleeved outside the electrode plate 10, and this separator sleeve is closed at the bonding portion 31. In this case, folding of the separators 20 will not lead to exposure of the electrode plate 10, and the electrode plate 10 is also less likely to move to the outside of the separators 20 on the side having the bonding portion 31, which reduces occurrence of situations of contact and short circuits of the electrode plate 10 with adjacent electrode plates 10 due to exposure to the outside of the separators 20, thereby improving the yield rate of the battery 300.

According to some embodiments of the present application, in a width direction of the electrode plate 10, both sides of the covering portion 21 are provided with the exceeding portions 22, and the two opposite sides of the electrode plate 10 are both provided with the bonding portions 31.

Both sides of the covering portion 21 are provided with the exceeding portions 22 along the width direction Y of the electrode plate 10, such that two opposite sides of the electrode plate 10 are provided with the bonding portions 31 in the width direction Y. Consequently, both sides of the electrode plate 10 along the width direction Y are not easily exposed to the outside, thereby reducing occurrence of situations of contact and short circuits of the electrode plate 10 with an adjacent electrode plate 10 due to exposure to the outside of the separators 20.

Since the electrode plate 10 and the separator 20 are typically wound along the length direction X during winding, and during the winding process, both sides of the separator 20 in the width direction Y are typically susceptible to folding due to the influence of winding equipment or other external influences, in this embodiment, both sides of the covering portion 21 in the width direction of the electrode plate 10 are provided with the exceeding portions 22, such that bonding portions 31 are formed on both sides of the electrode plate 10 in the width direction. In this way, the two separators 20 form a pocket-like structure to accommodate the electrode plate 10, and the electrode plate 10 is enveloped between the two separators 20 and thus is not easily exposed to the outside. Consequently, even if the separators 20 fold, the electrode plate 10 is less likely to contact an adjacent electrode plate 10 and cause a short circuit, thereby further improving the yield rate of the battery 300.

In some other embodiments, in addition to being provided on both sides of the electrode plate 10 in the width direction of the electrode plate 10, the bonding portions 31 may also be provided on both sides of the electrode plate 10 in the length direction of the electrode plate 10. That is, the exceeding portions 22 of the two separators 20, after being bonded, can form a closed accommodating space. The electrode plate 10 is accommodated within this closed accommodating space and the electrode plate 10 is completely enveloped by the two separators 20. In this case, the electrode plate 10 is not easily exposed to the outside even if any part of the separator 20 folds in any direction, making it even less likely for the electrode plate 10 to contact an adjacent electrode plate 10 and cause a short circuit, thereby further improving the yield rate of the battery 300.

According to some embodiments of the present application, reference is made to FIG. 4 to FIG. 6, where FIG. 4 is a schematic structural diagram of an electrode assembly 100 provided in some embodiments of the present application, FIG. 5 is a schematic cross-sectional view taken at A-A of the electrode assembly 100 provided in FIG. 4, and FIG. 6 is a schematic cross-sectional view taken at B-B of the electrode assembly 100 provided in FIG. 5.

In FIG. 4 to FIG. 6, the direction of the X-axis indicates the length direction of the electrode plate 10, the direction of the Y-axis indicates the width direction of the electrode plate 10, and the direction of the Z-axis indicates the thickness direction of the electrode plate 10; and In FIG. 5 and

FIG. 6, W1 is the dimension of the exceeding portion 22 of the separator 20 in the width direction of the electrode plate 10, and W2 is the dimension of the bonding portion 31 in the width direction of the electrode plate 10.

In some embodiments of the present application, in the width direction of the electrode plate 10, the dimension of the bonding portion 31 is less than or equal to the dimension of any one of the exceeding portions 22, namely, W2 ≤ W1.

The dimension of the bonding portion 31 in the width direction Y of the electrode plate 10 may be equal to the dimension of the exceeding portion 22 in the width direction Y of the electrode plate 10. In this case, when the bonding portion 31 is being formed, the exceeding portions 22 on both sides of the electrode plate 10 are completely connected to each other, and the bonding portion 31 is less likely to contact or connect to the electrode plate 10 during its formation process. Consequently, situations where the electrode plate 10 is damaged during the formation of the bonding portion 31 are reduced, thereby reducing negative impacts on the electrode plate 10.

The dimension of the bonding portion 31 in the width direction Y of the electrode plate 10 may also be less than the dimension of the exceeding portion 22 in the width direction Y of the electrode plate 10. In this case, in the width direction Y of the electrode plate 10, a gap exists between the electrode plate 10 and the bonding portion 31. This arrangement enables the bonding portion 31 to be less likely to contact or connect to the electrode plate 10 during its formation process, which reduces the occurrence of situations where the electrode plate 10 is damaged during the formation of the bonding portion 31, thereby reducing negative impacts on the electrode plate 10.

Since the bonding portion 31 is formed by connecting two exceeding portions 22, and the main function of the bonding portion 31 is to connect the two separators 20 to enable the two separators 20 to better envelop the electrode plate 10, in this embodiment, the dimension of the bonding portion 31 in the width direction of the electrode plate 10 is made less than or equal to the dimension of the exceeding portion 22, so as to reduce the occurrence of the situation where the two exceeding portions 22 cover a portion 21 of the electrode plate 10 during bonding, thereby reducing the negative impact on the electrode plate 10 during the process of bonding the exceeding portions 22 to form the bonding portion 31, which further improves the yield rate of the battery 300.

Referring to FIG. 5 and FIG. 6, in some embodiments, in the width direction of the electrode plate 10, the dimension of the exceeding portion 22 is in a range of 2 millimeters (mm) to 20 mm, namely, 2 mm ≤ W1 ≤ 20 mm. Specifically, the dimension of the exceeding portion 22 in the width direction of the electrode plate 10 may be 2 mm, 5 mm, 7 mm, 10 mm, 12 mm, 15 mm, 17 mm, 20 mm, or other values.

Making the dimension of the exceeding portion 22 in the range of 2 mm to 20 mm can enable the two exceeding portions 22 to have sufficient length to be stably connected to form the bonding portion 31, and can also reduce the occurrence of situations where the exceeding portion 22 damages the electrode plate 10 or causes negative impacts on the electrode plate 10 during the bonding process.

Since after the electrode plate 10 and the separator 20 are wound to form the electrode assembly 100, the exceeding portion 22 will be located outside the electrode plate 10, that is, the exceeding portion 22 will occupy space inside the case 40 after the electrode assembly 100 is placed into the case 40, the larger the dimension of the exceeding portion 22, the greater the negative impact on the energy density of the electrode assembly 100. Accordingly, making the dimension of the exceeding portion 22 in the range of 2 mm to 20 mm can also reduce the occupation of the internal space of the case 40 by the exceeding portion 22, and reduce the negative impact of the exceeding portion 22 on the energy density of the electrode assembly 100.

This embodiment provides some specific dimension parameters for the exceeding portion 22. In the width direction of the electrode plate 10, this dimension range of the exceeding portion 22 enables the two exceeding portions 22 to have sufficient length to extend beyond the electrode plate 10 and to be bonded to form a bonding portion 31; meanwhile, this dimension range can also reduce the occurrence of the situation where the exceeding portions 22 cover the electrode plate 10 during the bonding process, thereby reducing the negative impact on the electrode plate 10 during the process of bonding the exceeding portions 22 to form the bonding portion 31. Furthermore, this dimension range can also reduce the negative impact of the exceeding portion 22 on the energy density of the electrode assembly 100.

Referring to FIG. 5 and FIG. 6, in some embodiments, in the width direction of the electrode plate 10, the dimension of the bonding portion 31 is in a range of 2 mm to 20 mm, namely, 2 mm ≤ W2 ≤ 20 mm. Specifically, the dimension of the bonding portion 31 in the width direction of the electrode plate 10 may be 2 mm, 5 mm, 7 mm, 10 mm, 12 mm, 15 mm, 17 mm, 20 mm, or other values.

Making the dimension of the bonding portion 31 in the range of 2 mm to 20 mm can enable the dimension of the bonding portion 31 to be less than or equal to the dimension of the exceeding portion 22, and can also enable the two bonding portions 31 to have sufficient length to be stably connected to form the bonding portion 31, and can also reduce the occurrence of situations where the bonding portion 31 damages the electrode plate 10 or causes negative impacts on the electrode plate 10 during the bonding process.

Since after the electrode plate 10 and the separator 20 are wound to form the electrode assembly 100, the bonding portion 31 will be located outside the electrode plate 10, that is, the bonding portion 31 will occupy space inside the case 40 after the electrode assembly 100 is ensembled into the case 40, the dimension of the bonding portion 31 should not be too large, so as to reduce the occupation of the internal space of the case 40 by the bonding portion 31, thereby reducing the impact of the bonding portion 31 on the energy density of the electrode assembly 100. Therefore, making the dimension of the bonding portion 31 in the range of 2 mm to 20 mm can also reduce the negative impact of the bonding portion 31 on the energy density of the electrode assembly 100.

This embodiment provides some specific dimension parameters for the bonding portion 31. In the width direction of the electrode plate 10, this dimension range of the bonding portion 31 enables the bonding portion 31 to be relatively robust without rupturing under pressure during the winding process, and also enables the separators 20 to still envelop the electrode plate 10 when the separators fold, which improves the stability of enveloping the electrode plate 10 by the separators 20, thereby improving the yield rate of the battery 300. Furthermore, it can also reduce the negative impact of the bonding portion 31 on the energy density of the electrode assembly 100.

According to some embodiments of the present application, reference is made to FIG. 4 to FIG. 6, where FIG. 4 is a schematic structural diagram of an electrode assembly 100 provided in some embodiments of the present application, FIG. 5 is a schematic cross-sectional view taken at A-A of the electrode assembly 100 provided in FIG. 4, and FIG. 6 is a schematic cross-sectional view taken at B-B of the electrode assembly 100 provided in FIG. 5.······

In some embodiments of the present application, the covering portion 21 is attached to the electrode plate 10, or a gap exists between the covering portion 21 and the electrode plate 10.

To reduce the occurrence of the separator 20 detaching from the electrode plate 10, which would lead to exposure of the electrode plate 10 and its connection to an adjacent electrode plate 10, it is currently common practice to laminate the separator 20 onto the electrode plate 10. The lamination of the separator 20 and the electrode plate 10 mostly includes a rolling process, and the rolling of the separator 20 and the electrode plate 10 can easily negatively impact the air permeability of the separator 20, and may even lead to the closure of pore channels in the separator 20, thereby negatively affecting the transmission efficiency of ions such as lithium ions.

In this embodiment, by providing bonding portions 31 on both sides of the electrode plate 10 in the width direction Y, the separator 20 can be relatively stably fixed to the electrode plate 10 through the bonding portions 31 on both sides of the electrode plate 10, making it less likely for the separator 20 to detach from the electrode plate 10 and less likely for the electrode plate 10 to be exposed to the outside. Therefore, in this case, the separator 20 no longer needs to be connected to the electrode plate 10 through rolling or other processes. That is, the covering portion 21 may be attached to the electrode plate 10, or a gap may exist with the electrode plate 10, such that the covering portion 21 has good air permeability.

It is understandable that if it is necessary to reduce the space occupation between the electrode plate 10 and the separator 20, the gap between the covering portion 21 and the electrode plate 10 can be reduced by controlling the dimension of the exceeding portion 22 in the width direction Y and the dimension of the bonding portion 31 in the width direction Y, or the gap between the covering portion 21 and the electrode plate 10 can be reduced by tensioning the separator 20 or by other means.

To prevent the separators 20 from detaching from the electrode plate 10, it is typically necessary to laminate the electrode plate 10 and the separators 20. The lamination process of the electrode plate 10 and the separators 20 typically requires rolling by a pressure roller. After being rolled, the separators 20 risk a reduction in air permeability, while the reduction in air permeability will lead to a reduction in the ion transmission efficiency of the separators 20. Accordingly, this embodiment makes the separators 20 attached to the electrode plate 10 or have a gap existing with the electrode plate 10. Because the separators 20 on both sides of the electrode plate 10 are connected at both sides in the width direction of the electrode plate 10 via the bonding portion 31, the separators 20 can be connected to the electrode plate 10 through the bonding portion 31 without occurrence of detachment of the separators 20. Therefore, it is not necessary to further laminate the separators 20 with the electrode plate 10, thereby alleviating the situation of reduction in air permeability of the separators 20 caused by lamination.

In some embodiments, the air permeability of the covering portion 21 is in a range of 100 seconds per cubic centimeter (s/cc) to 300 s/cc. Specifically, air permeability of the covering portion 21 may be 100 s/cc, 150 s/cc, 200 s/cc, 250 s/cc, 300 s/cc, or other values.

Air permeability refers to the air transmission performance through fabrics (including traditional textiles and products, non-woven fabrics, blankets, highly permeable paper, filter materials, leather, polyethylene films, polytetrafluoroethylene films, polyurethane soft foam, various felts, etc.). It is expressed as the rate of air flow vertically passing through the sample under specified conditions of sample area, pressure drop, and time. Therefore, air permeability represents the amount of air transmitted through the material per second. In this embodiment, the unit of air permeability is s/cc, where s is the unit of time, referring to seconds, and cc is the unit of volume, referring to cubic centimeters (cm³). The conversion relationship is 1 cubic meter = 1000 cubic decimeters = 1,000,000 cubic centimeters.

If the air permeability of the separator 20 is too high, the pore channels of the separator 20 are equivalent to being closed, and ions from the electrolyte cannot pass through, preventing the achievement of high ion conductivity. If the air permeability is too low, it is equivalent to the pore channels of the separator 20 being open, resulting in lower resistance to ion transmission and higher energy density.

For the covering portion 21, the function of the covering portion 21 is to enable ions in the electrolyte to pass through while reducing the passage of other substances. Therefore, maintaining the air permeability of the covering portion 21 within the range of 100 s/cc to 300 s/cc can both provide lower resistance to ion passage and better block large particles of other substances.

Under the effects of the bonding portion 31, the exceeding portion 22, and the covering portion 21, the electrode plate 10 can be enveloped between the two separators 20 and is less likely to be exposed to the outside. Therefore, there is no need to perform rolling lamination of the separator 20 and the electrode plate 10, enabling the air permeability of the covering portion 21 to be set within the range of 100 s/cc to 300 s/cc, thereby making ions have high transmission efficiency.

This embodiment further provides some specific parameters for the air permeability of the covering portion 21. This air permeability range of the covering portion 21 enables the separator 20 to have a high ion transmission efficiency at the covering portion 21, thereby improving the performance of the battery 300.

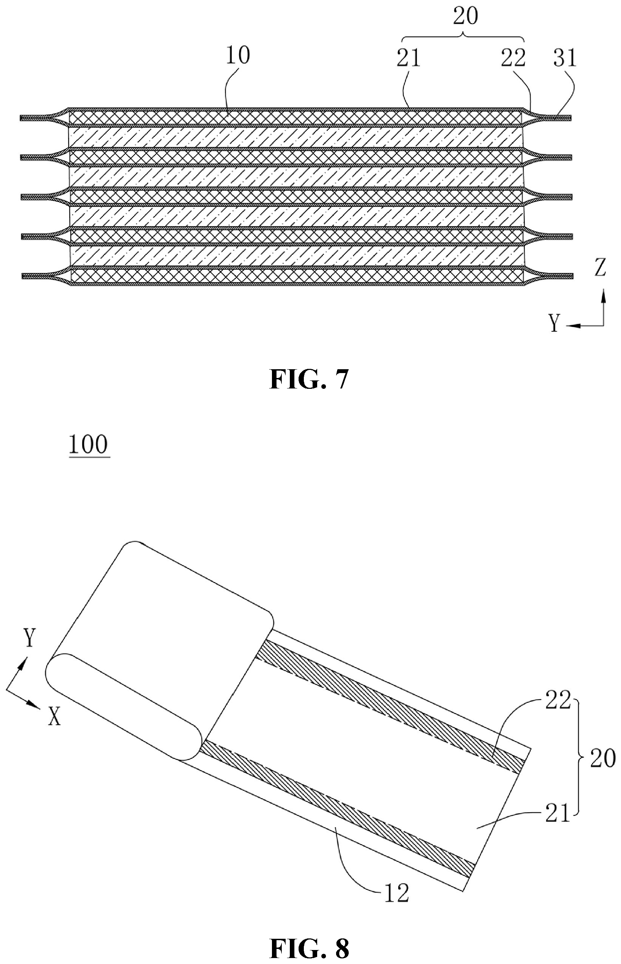

According to some embodiments of the present application, reference is made to FIG. 8, where FIG. 8 is a schematic structural diagram of bonding portions 31 being arranged at intervals in an electrode assembly 100 provided in some embodiments of the present application.

The direction of the X-axis in the figure indicates the length direction of the electrode plate 10, and the direction of the Y-axis indicates the width direction of the electrode plate 10.

In some embodiments of the present application, in a length direction of the electrode plate 10, the dimension of the bonding portion 31 is less than or equal to the dimension of the exceeding portion 22.

The dimension of the bonding portion 31 in the length direction of the electrode plate 10 may be equal to the dimension of the exceeding portion 22 in the length direction of the electrode plate 10. That is, the bonding portion 31 can seal the accommodating space formed between the two separators 20. In this case, the accommodating space does not have an opening on the side where the bonding portion 31 is located. This arrangement can reduce the occurrence of rupture in the bonding portion 31 and improves the stability of the bonding portion 31.

Since the bonding portion 31 is formed by connecting two connection portions, the flow performance of the electrolyte solution at the bonding portion 31 will be weaker than the flow performance of the electrolyte solution at the covering portion 21 and the exceeding portion 22. Accordingly, the dimension of the bonding portion 31 in the length direction of the electrode plate 10 may also be made smaller than the dimension of the exceeding portion 22 in the length direction of the electrode plate 10. That is, the bonding portion 31 cannot make the accommodating space formed between the two separators 20 completely closed. In this case, the accommodating space has an opening on the side where the bonding portion 31 is located, and the electrolyte solution can also enter the accommodating space through this opening to improve the wettability of the electrode plate 10 and the separators 20.

Since the function of the bonding portion 31 is to fix the exceeding portions 22 of the two separators 20 on one side of the electrode plate 10, such that the separators 20 are not easily detached from the electrode plate 10, so as to reduce the occurrence of the electrode plate 10 being exposed to the outside and contacting an adjacent electrode plate 10. Accordingly, this embodiment provides some dimension ranges for the bonding portion 31. When the dimension of the bonding portion 31 in the length direction of the electrode plate 10 is equal to the dimension of the exceeding portion 22, the exceeding portions 22 of the two separators 20 are completely connected; when the dimension of the bonding portion 31 in the length direction of the electrode plate 10 is less than the dimension of the exceeding portion 22, an unconnected opening exists between the exceeding portions 22 of the two separators 20, such that the electrolyte solution can more easily enter between the two separators 20 through this opening. That is, the dimension of the bonding portion 31 in the length direction of the electrode plate 10 being less than the dimension of the exceeding portion 22 can improve the wettability of the electrode plate 10 and the separators 20, thereby improving the performance of the battery 300.

Referring to FIG. 8, in some embodiments, one side of the electrode plate 10 is provided with at least two bonding portions 31 arranged at intervals along the length direction of the electrode plate 10, and a spacing space 32 is formed between the two bonding portions 31, where in the thickness direction of the electrode plate 10, the spacing space 32 is also formed between two exceeding portions 22 on both sides of the electrode plate 10.

One side of the electrode plate 10 is provided with at least two bonding portions 31 arranged at intervals, where the number of bonding portions 31 may be two, three, or more. The plurality of bonding portions 31 are arranged in sequence along the length direction X of the electrode plate 10, such that the exceeding portions 22 on both sides of the electrode plate 10 in the width direction (Z) can be connected at the bonding portions 31, thereby reducing the exposure of the electrode plate 10.

Spacing spaces 32 can be formed between two adjacent bonding portions 31. Similar to the bonding portions 31, the spacing spaces 32 can also be arranged in sequence along the length direction X of the electrode plate 10, such that the spacing spaces 32 and the bonding portions 31 can be arranged alternately in sequence. In the thickness direction of the electrode plate 10, the spacing spaces 32 are also formed between the two exceeding portions 22, and a channel is formed between the two exceeding portions 22 or within the two exceeding portions 22 for the electrolyte solution to flow through.

Since the separators 20 covering the electrode plate 10 should not lead to the existence of wrinkles, at the position corresponding to the spacing space 32, the two exceeding portions 22 should be attached to each other or have a small gap between them. When the two exceeding portions 22 are attached to each other, the flow performance of the electrolyte solution at the spacing space 32 is still stronger than the flow performance of the electrolyte solution at the bonding portion 31. Therefore, the channel for the electrolyte solution to flow through is formed within the two exceeding portions 22 at this time. When a small gap exists between the two exceeding portions 22, the electrolyte solution can enter the accommodating space through this gap, and the channel for the electrolyte solution to flow through also includes this gap.

As the number of bonding portions 31 increases, the number of spacing spaces 32 will correspondingly increase. Furthermore, since the spacing spaces 32 are arranged at intervals on one side of the electrode plate 10, as the number of spacing spaces 32 increases, the distribution of the spacing spaces 32 will become more uniform, allowing the electrolyte solution to enter the accommodating space more smoothly and evenly, thereby further improving the wettability of the electrode plate 10 and the separators 20.

This embodiment provides some specific structures where the dimension of the bonding portion 31 in the length direction X of the electrode plate 10 is less than the dimension of the exceeding portion 22. At least two bonding portions 31 are provided, and the bonding portions 31 are arranged at intervals to form a spacing space 32 between the bonding portions 31, and this spacing space 32 is also formed between the two exceeding portions 22. This spacing space 32 can serve as an opening between the two separators 20 to improve the wettability of the electrode plate 10; as the number of bonding portions 31 increases, the number of spacing spaces 32 correspondingly increases and they are arranged at intervals along the length direction of the electrode plate 10, thereby enabling the electrolyte solution to enter between the two separators 20 more smoothly and uniformly, so as to further improve the wettability of the electrode plate 10 and the separators 20, thereby further improving the performance of the battery 300.

Referring to FIG. 8, in some embodiments, in the length direction of the electrode plate 10, the dimension of the bonding portion 31 is greater than or equal to 2 mm, and the dimension of the spacing space 32 is in a range of 2 mm to 100 mm.

In the figure, L1 is the dimension of the bonding portion 31 in the length direction X of the electrode plate 10, and L2 is the dimension of the spacing space 32 in the length direction X of the electrode plate 10.

The specific dimension of the bonding portion 31 in the length direction X may be 2 mm, 5 mm, 10 mm, 20 mm, or other values. The dimension of the bonding portion 31 in the length direction of the electrode plate 10 is greater than or equal to 2 mm, such that the bonding portion 31 has strong stability, thereby reducing the occurrence of rupture in the bonding portion 31.

The specific dimension of the spacing space 32 in the length direction X may be 2 mm, 5 mm, 10 mm, 20 mm, 30 mm, 50 mm, 70 mm, 100 mm, or other values. This arrangement enables the electrolyte solution to better enter the accommodating space, enabling the electrode plate 10 and the separator 20 to have better wettability; this arrangement can also enable the exceeding portions 22 to be connected relatively stably, thereby reducing the occurrence of rupture in the exceeding portions 22.

This embodiment provides some dimensions for the bonding portion 31 and the spacing space 32 in the length direction of the electrode plate 10, which enables the two exceeding portions 22 to be stably connected at the bonding portion 31, and also enables the electrolyte solution to more easily enter between the two separators 20 through the spacing space 32. Meanwhile, the dimension range of the spacing space 32 can also reduce the impact of the spacing space 32 on the stability of the bonding portion 31, thereby enabling the exceeding portions 22 to be stably connected at the bonding portion without being prone to rupture.

Referring to FIG. 4, in some embodiments, one side of the electrode plate body 11 is provided with at least two tab regions 12, and the at least two tab regions 12 are arranged at intervals along the length direction of the electrode plate 10.

The portion of the electrode plate 10 that has active material constitutes the electrode plate body 11 of the electrode assembly 100, while the portions of the electrode plate 10 that do not have active material constitute the tab regions 12 of the electrode assembly 100. If the portions of the electrode plate 10 that do not have active material are subjected to die-cutting or other forming processing, at least two tab regions 12 arranged at intervals can be formed on one side of the electrode plate body 11.

In this case, the exceeding portions 22 on both sides of the electrode plate 10 in the thickness direction (Z) may be connected to each other at the spacings between the tab regions 12 and form the bonding portions 31, or the exceeding portions 22 on both sides of the electrode plate 10 in the thickness direction (Z) may be connected to the tab regions 12 and form the bonding portions 31.

This arrangement of the tab regions 12 is mostly applied in square-case batteries, but may also be applied in cylindrical batteries or other batteries.

This embodiment provides some arrangement manners for the tab regions 12. At least two tab regions 12 are arranged at intervals along the length direction of the electrode plate 10, which enables the exceeding portions 22 to be either connected to each other and form bonding portions 31, or enables the exceeding portions 22 to be connected to the tab regions 12 and form bonding portions 31, so as to fix the exceeding portions 22, thereby making it less likely for the electrode plate 10 to be exposed due to folding of the separators 20.

Referring to FIG. 8, in some embodiments, in the length direction X of the electrode plate 10, a length of the tab region 12 is the same as a length of the electrode plate body 11.

The portion of the electrode plate 10 that has active material constitutes the electrode plate body 11 of the electrode assembly 100, and the portion of the electrode plate 10 that does not have active material constitutes the tab region 12 of the electrode assembly 100. If the portion of the electrode plate 10 that does not have active material is not subjected to die-cutting or other forming processing, a tab region 12 having the same length as the electrode plate body 11 can be formed on one side of the electrode plate body 11.

In this case, the exceeding portions 22 on both sides of the electrode plate 10 in the thickness direction (Z) are both connected to the tab regions 12 and form the bonding portions 31. The exceeding portions 22 are fixed to the tab regions 12, and in this case, even if the separators 20 fold, the electrode plate 10 is less likely to be exposed to the outside.

This embodiment provides some other arrangement manners for the tab regions 12. The dimension of the tab region 12 in the length direction X of the electrode plate 10 is made the same as the dimension of the electrode plate body 11 in the length direction X of the electrode plate 10, enabling the exceeding portions 22 to be connected to the tab regions 12 and form bonding portions 31, so as to fix the exceeding portions 22, thereby making it less likely for the electrode plate 10 to be exposed due to folding of the separators 20.

Referring to FIG. 8, in some embodiments, in the length direction X of the electrode plate 10, the bonding portion 31 may completely cover the tab region 12, or may cover a portion 21 of the tab region 12. When the bonding portion 31 completely covers the tab region 12 or covers a portion 21 of the tab region 12, the adhesion force between the exceeding portion 22 and the tab region 12 should be greater than 1 newton (N), so as to reduce the occurrence of rupture in the exceeding portion 22 at the tab region 12.

In the length direction X of the electrode plate 10, the bonding portion 31 may also not cover the tab region 12. That is, the tab region 12 is disposed in the spacing space 32 between two adjacent bonding portions 31.

This embodiment provides the relationship between the tab region 12 and the bonding portion 31. In the length direction X of the electrode plate 10, the bonding portion 31 may either completely cover the tab region 12 or cover a portion 21 of the tab region 12, or the bonding portion 31 may not cover the tab region 12 at all, which means that the tab region 12 is disposed in the opening between two bonding portions 31, such that the arrangement of the bonding portion 31 does not affect the function of the tab region 12.

In some embodiments, in the width direction of the electrode plate 10, a ratio of the dimension of the exceeding portion 22 to the dimension of the tab region 12 is in a range of 1:3 to 2:3. Specifically, the ratio of the dimension of the exceeding portion 22 to the dimension of the tab region 12 may be 1:3, 1:2, 2:3, or other values.

Since the exceeding portion 22 should have a certain dimension in the width direction Y of the electrode plate 10 such that the bonding portion 31 formed by the connection of the exceeding portions 22 has certain stability and the occurrence rupture in the bonding portion 31 is reduced, and the tab region 12 should also have a certain length such that the portion of the tab region 12 that extends beyond the separator 20 can be stably connected to the electrode terminal, the range of the ratio of the dimension of the exceeding portion 22 to the dimension of the tab region 12 is set to enable the bonding portion 31 to have high stability and not prone to rupture, and also enable the tab region 12 to be relatively stably connected to the electrode terminal.

This embodiment provides a relationship between the tab region 12 and the exceeding portion 22. Within this dimension range, the exceeding portion 22 not only has a strong adhesion force but can also reduce the impact of the separator 20 on the connection of the tab region 12 to other structures.

In some embodiments, in the width direction of the electrode plate 10, a difference between the dimension of the tab region 12 and the dimension of the exceeding portion 22 is in a range of 1 mm to 40 mm.

The difference between the dimension of the tab region 12 in the width direction Y and the dimension of the exceeding portion 22 in the width direction Y refers to the dimension, in the width direction Y, of the portion of the tab region 12 that extends beyond the separator 20. The specific dimension in the width direction Y of the portion of the tab region 12 that extends beyond the separator 20 may be 1 mm, 5 mm, 10 mm, 15 mm, 20 mm, 25 mm, 30 mm, 40 mm, or other values.

Since the portion of the tab region 12 that extends beyond the separator 20 is mainly configured for connection to the electrode terminal, when the dimension of the portion of the tab region 12 that extends beyond the separator 20 is within the range of 1 mm to 40 mm, the separator 20 can be relatively stably connected to the electrode terminal, and it is not prone to being too long, which would cause negative impacts on energy density, cost, etc.

This embodiment provides a dimension range for the portion of the tab region 12 that extends beyond the separator 20, so as to facilitate the connection of the tab region 12 to other structures, thereby reducing the potential negative impact of the separator 20 on the connection stability of the tab region 12.

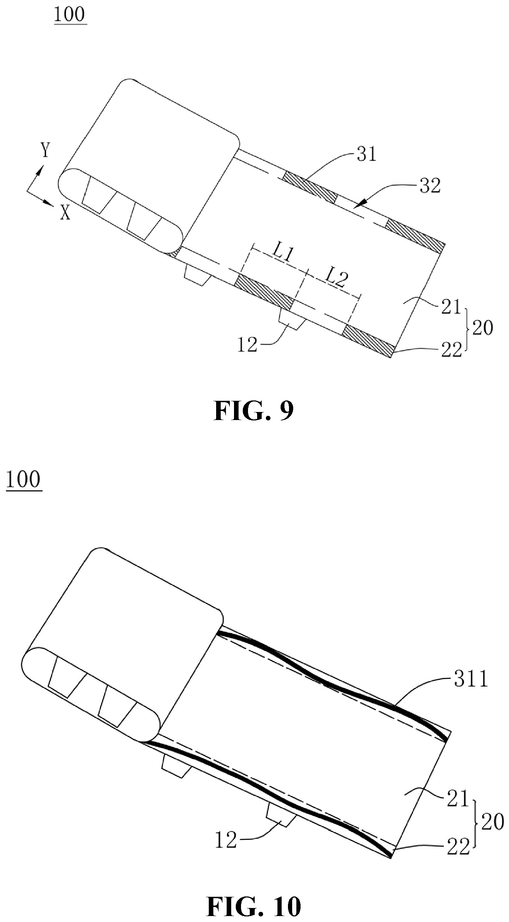

According to some embodiments of the present application, reference is made to FIG. 9 to FIG. 13, where FIG. 9 to FIG. 13 are schematic structural diagrams of different connection patterns 311 in an electrode assembly 100 provided in some embodiments of the present application.

In some embodiments of the present application, a connection pattern 311 is formed on the bonding portion 31, and the exceeding portions 22 on the two opposite sides of the electrode plate 10 are connected at the connection pattern 311.

The connection pattern 311 refers to the pattern formed by the connection of the two exceeding portions 22. For example, the connection pattern 311 may be a pattern formed by weld marks obtained by welding two connection portions, or may be a pattern formed by embossing obtained by rolling the two exceeding portions 22, or may also be a pattern formed by adhesive marks obtained by adhering the two exceeding portions 22. The connection pattern 311 is not limited to weld marks, embossing, etc., and may also be a pattern formed by other connection methods.

The connection pattern 311 is configured to connect at least a portion of the two exceeding portions 22 and form a bonding portion 31, such that the bonding portion 31 has greater stability and is not prone to rupture.

The connection pattern 311 may be linear, dotted, or curved; the connection pattern 311 may also be rectangular, circular, or triangular; and the connection pattern 311 may also be S-shaped, V-shaped, or other shapes.

According to the arrangement of the bonding portion 31, when the dimension of the bonding portion 31 in the length direction X of the electrode plate 10 is equal to the dimension of the exceeding portion 22 in the length direction X of the electrode plate 10, the connection pattern 311 may be a continuous pattern and its dimension in the length direction X of the electrode plate 10 may be equal to the dimension of the bonding portion 31 in the length direction X of the electrode plate 10. The dimension of the connection pattern 311 in the length direction X of the electrode plate 10 may also be smaller than the dimension of the bonding portion 31 in the length direction X of the electrode plate 10, such that a plurality of connection patterns 311 may be provided and arranged at intervals along the length direction X of the electrode plate 10.

According to the arrangement of the bonding portion 31, when the bonding portions 31 are arranged at intervals in the length direction X of the electrode plate 10, at least one connection pattern 311 is provided on each bonding portion 31, such that the bonding portion 31 has strong stability.

This embodiment provides some methods for connecting the exceeding portions 22, so as to enable the two exceeding portions 22 to be connected through the connection pattern 311 and bonded to form the bonding portion 31. This arrangement can enable the exceeding portions 22 to have high stability at the connection pattern 311 and make the exceeding portions 22 less susceptible to detachment at the connection pattern 311 due to external influences, thereby reducing risks such as short circuits that may result from the electrode plate 10 being exposed to the outside.

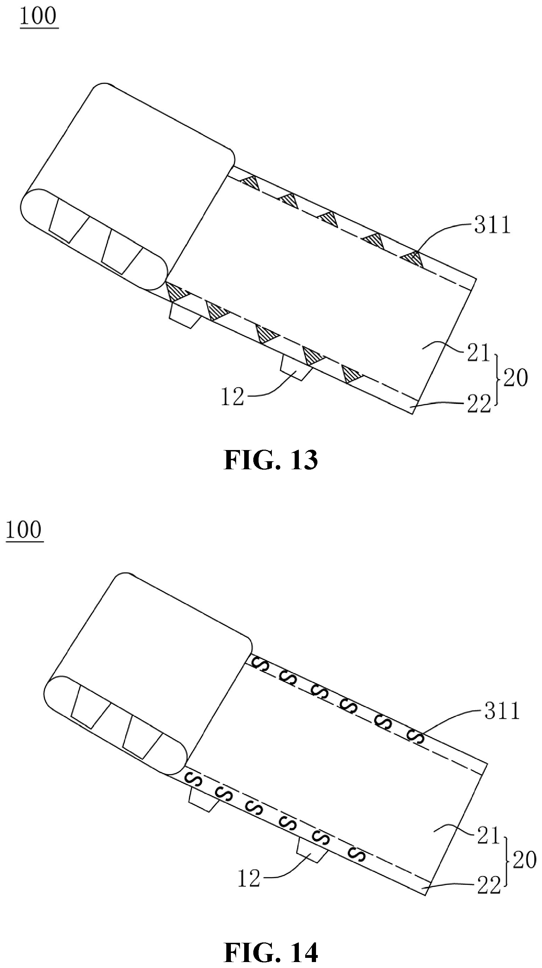

Referring to FIG. 9 and FIG. 13, in some embodiments, the connection pattern 311 includes a curved pattern or a polyline-shaped pattern.

The curved pattern may be an S-shaped pattern or a pattern of other shapes. The polyline-shaped pattern may be a Z-shaped pattern or a pattern of other shapes.

Referring to FIG. 9, the dimension of the curved or polyline-shaped connection pattern 311 in the length direction X of the electrode plate 10 may be the same as the dimension of the exceeding portion 22 in the length direction X of the electrode plate 10. In this case, the bonding portion 31 completely seals the corresponding side of the accommodating space. Referring to FIG. 13, the dimension of the curved or polyline-shaped connection pattern 311 in the length direction X of the electrode plate 10 may also be smaller than the dimension of the exceeding portion 22 in the length direction X of the electrode plate 10. In this case, a plurality of connection patterns 311 may be provided and arranged at intervals along the length direction X of the electrode plate 10. Correspondingly, the bonding portions 31 are also arranged at intervals and form spacing spaces 32.

When the direction of force applied to the exceeding portions 22 at the connection pattern 311 is consistent with the extension direction of the connection pattern 311, the exceeding portions 22 are more likely to detach from each other or rupture. Conversely, when the direction of force applied to the exceeding portions 22 at the connection pattern 311 differs from the extension direction of the connection pattern 311, the connection pattern 311 can better connect the two exceeding portions 22.

Accordingly, this embodiment provides some shapes of the connection pattern 311. The connection pattern 311 is made curved or polyline-shaped, meaning that the connection pattern 311 has multiple different extension directions. Since the direction of external force applied to the exceeding portions 22 is typically relatively singular and unlikely to be consistent with the shape of the connection pattern 311, this arrangement can enhance the connection capability of the connection pattern 311 and improve the stability of the bonding portion 31. It is understandable that the connection pattern 311 may also include an A-shaped pattern, a flower-like pattern, or other patterns.

Referring to FIG. 10, in some embodiments, the connection pattern 311 may include circular patterns. In this case, a plurality of circular patterns are arranged at intervals along the length direction X of the electrode plate 10. Correspondingly, the bonding portions 31 are also arranged at intervals along the length direction X of the electrode plate 10, and a spacing space 32 is formed between every two adjacent bonding portions 31.

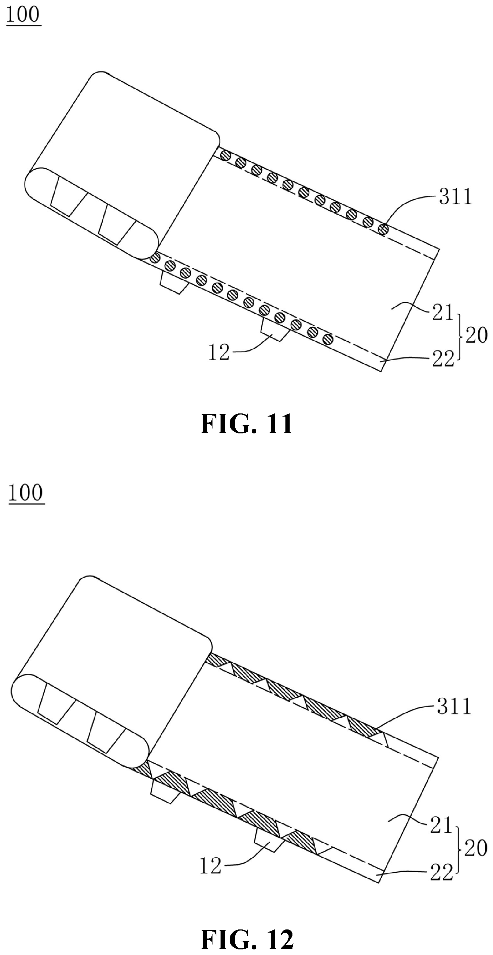

Referring to FIG. 11, in some other embodiments, the connection pattern 311 may also include continuous trapezoidal patterns. In this case, a plurality of trapezoidal patterns are sequentially arranged along the length direction X of the electrode plate 10 and are connected at the corners. Here, the bonding portion 31 can seal the corresponding side of the accommodating space.

Referring to FIG. 12, in yet other embodiments, the connection pattern 311 may include triangular patterns. In this case, a plurality of triangular patterns are arranged at intervals along the length direction X of the electrode plate 10. Correspondingly, the bonding portions 31 are also arranged at intervals along the length direction X of the electrode plate 10, and a spacing space 32 is formed between every two adjacent bonding portions 31.

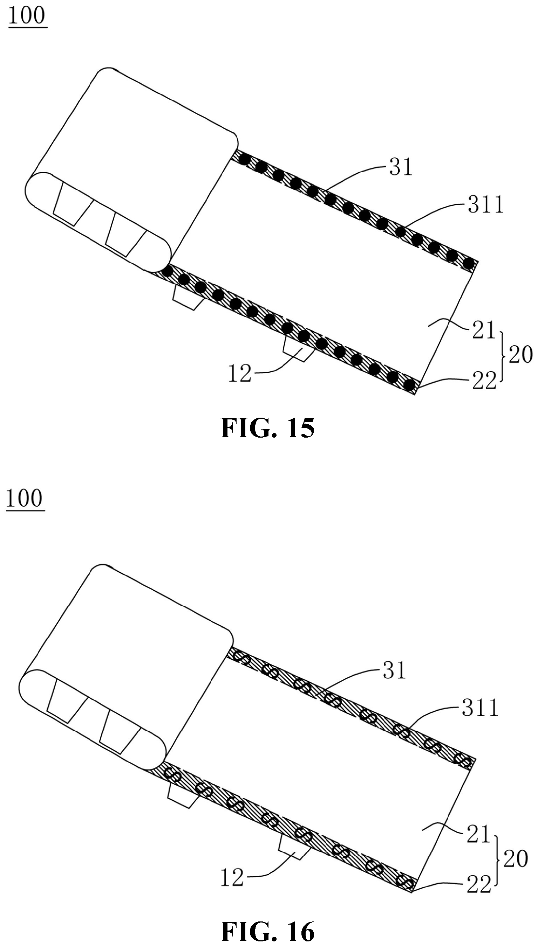

Referring to FIG. 14 and FIG. 15, in some embodiments, the bonding portion 31 may also be formed through secondary lamination. For example, the two exceeding portions 22 undergo first lamination and form the bonding portion 31. In this case, the bonding portion 31 completely seals the corresponding side of the accommodating space.

After the first lamination, secondary lamination is performed at the bonding portion 31, and the connection pattern 311 is formed on the bonding portion 31. The connection pattern 311 may be linear, dotted, or curved; the connection pattern 311 may also be rectangular, circular, or triangular; and the connection pattern 311 may also be S-shaped, V-shaped, or other shapes.

The secondary lamination can further enhance the stability of the bonding portion 31, and can thus reduce the occurrence of rupture in the bonding portion 31, thereby better reducing the exposure of the electrode plate 10 to the outside, and consequently reducing the occurrence of the electrode plate 10 contacting an adjacent electrode plate 10 and causing a short circuit.

Referring to FIG. 14, after the first lamination, the secondary lamination forms circular patterns on the bonding portions 31, and compared to a design where the connection pattern 311 is formed directly, this arrangement can further enhance the stability of the bonding portion 31. Referring to FIG. 15, after the first lamination, the secondary lamination forms S-shaped patterns on the bonding portions 31, and compared to a design where the secondary lamination forms circular patterns on the bonding portions 31, this arrangement can further enhance the stability of the bonding portions 31.

According to some embodiments of the present application, the electrode plate 10 is a positive electrode plate and/or a negative electrode plate. That is, in the electrode assembly 100, the positive electrode plate may be enveloped by the separators 20 in cooperation with the bonding portion 31, or the negative electrode plate may be enveloped by the separators 20 in cooperation with the bonding portion 31, so as to reduce the occurrence of the electrode plate 10 being exposed due to folding of the separators 20, thereby reducing the occurrence of the electrode plate 10 contacting an adjacent electrode plate 10 and causing a short circuit.

In the electrode assembly 100, both the positive electrode plate and the negative electrode plate may be enveloped by the separators 20 in cooperation with the bonding portion 31, thereby better protecting the positive electrode plate and the negative electrode plate, further reducing the occurrence of the electrode plate 10 being exposed due to folding of the separators 20, and consequently reducing the occurrence of the electrode plate 10 contacting an adjacent electrode plate 10 and causing a short circuit.

In this embodiment, the structures of the separator 20 and the bonding portion 31 can be applied to either the positive electrode plate or the negative electrode plate, or simultaneously to both the positive and negative electrode plates, so as to further reduce risks such as short circuits that may be caused by folding of the separators 20.

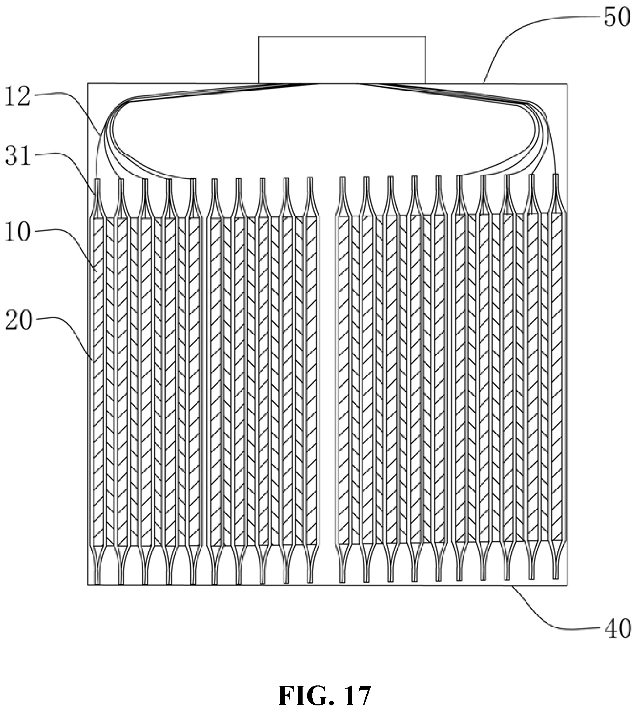

In a second aspect, referring to FIG. 3, FIG. 17, and FIG. 18, some embodiments of the present application further provide a battery cell 200, including the electrode assembly 100 provided in some embodiments of the first aspect. Referring to FIG. 3, the battery cell 200 includes an end cover 50, a case 40, an electrode assembly 100, and other functional components.

The end cover 50 is a component that covers an opening of the case 40 to isolate an internal environment of the battery cell 200 from an external environment. The case 40 is an assembly for fitting the end cover 50 to form the internal environment of the battery cell 200, wherein the formed internal environment can be configured to accommodate the electrode assembly 100, electrolyte solution, and other components.

The case 40 may be a square case. In this case, the battery cell 200 is a square-case battery cell. The tab regions 12 may be at least two in number and arranged at intervals along the length direction X of the electrode plate 10 on one side of the electrode plate body 11, or the tab region 12 may be only one in number and have the same length as the electrode plate body 11.

The case 40 may also be a cylindrical case. In this case, the battery cell 200 is a cylindrical battery cell. The tab region 12 may be only one in number and have the same length as the electrode plate body 11.

In the battery cell 200, there may be one, two, or more electrode assemblies 100.

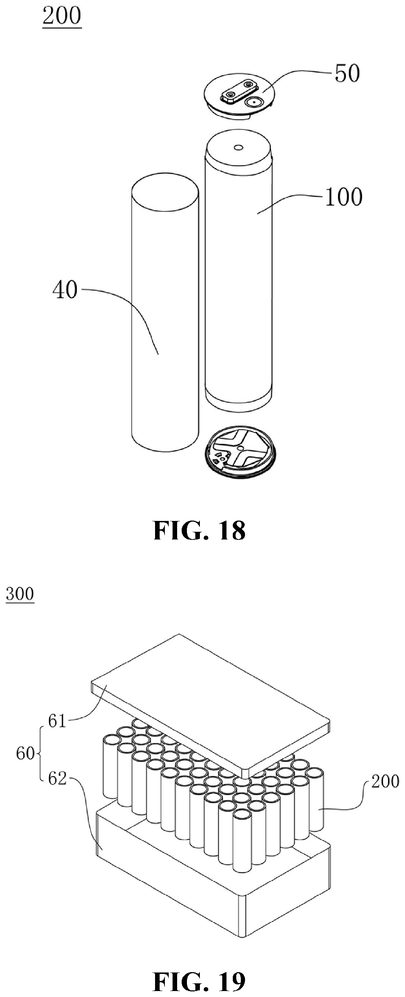

In a third aspect, referring to FIG. 2 and FIG. 19, some embodiments of the present application further provide a battery 300, including the electrode assembly 100 provided in some embodiments of the first aspect, or the battery cell 200 provided in some embodiments of the second aspect.

Referring to FIG. 2, the battery 300 includes a box body 60 and a battery cell 200. The battery cell 200 is accommodated within the box body 60. The box body 60 is configured to provide an accommodating space for the battery cell 200. The box body 60 may adopt various structures. For example, the box body 60 may be cylindrical, cuboid, or other shapes.

In the battery 300, the battery cell 200 may be a square-case battery cell or a cylindrical battery cell. There may be a plurality of battery cells 200, and the plurality of battery cells 200 may be connected in series, in parallel, or in series-parallel connection.

In a fourth aspect, some embodiments of the present application further provide an electrical apparatus 400, including the electrode assembly 100 provided in some embodiments of the first aspect, or the battery cell 200 provided in some embodiments of the second aspect, or including the battery 300 provided in some embodiments of the third aspect.

The electrical apparatus 400 may be, but is not limited to, a mobile phone, a tablet, a laptop, an electric toy, an electric tool, a battery vehicle, an electric vehicle, a ship, a spacecraft, and so on. Among them, the electric toy may include a fixed or mobile electric toy, such as a game console, an electric vehicle toy, an electric ship toy, an electric airplane toy, and the like. The spacecraft may include an airplane, a rocket, a space shuttle, a spaceship, and the like.

The above embodiments are merely used for describing the technical solutions of the present application, instead of limiting the present application; although the present application is described in detail with reference to the foregoing embodiments, those of ordinary skill in the art should understand that: they can still make modifications on the technical solutions described in the foregoing embodiments, or perform equivalent replacements on a part of technical features thereof; and these modifications or replacements are not intended to make the essences of the corresponding technical solutions depart from the spirit and scope of the technical solutions of the embodiments of the present application, but should all be encompassed within the scope of protection of the present application.

## Claims

1. An electrode assembly, comprising:
an electrode plate comprising an electrode plate body and a tab region; and
separators disposed on two opposite sides of the electrode plate along a thickness direction of the electrode plate, wherein the separators each comprise a covering portion covering the electrode plate body and an exceeding portion connected to the covering portion, the exceeding portion covering a portion of the tab region, wherein
the exceeding portions on the two opposite sides of the electrode plate are at least partially connected to each other and form a bonding portion, or the exceeding portions on the two opposite sides of the electrode plate are at least partially connected to the tab region and form the bonding portion.

2. The electrode assembly according to claim 1, wherein in a width direction of the electrode plate, both sides of the covering portion are provided with the exceeding portions, and the two opposite sides of the electrode plate are both provided with the bonding portions.

3. The electrode assembly according to claim 1 or 2, wherein in a width direction of the electrode plate, the dimension of the bonding portion is less than or equal to the dimension of the exceeding portion.

4. The electrode assembly according to claim 3, wherein in the width direction of the electrode plate, the dimension of the exceeding portion is in a range of 2 mm to 20 mm.

5. The electrode assembly according to claim 3 or 4, wherein in the width direction of the electrode plate, the dimension of the bonding portion is in a range of 2 mm to 20 mm.

6. The electrode assembly according to any one of claims 1 to 5, wherein the covering portion is attached to the electrode plate, or a gap exists between the covering portion and the electrode plate.

7. The electrode assembly according to claim 6, wherein air permeability of the covering portion is in a range of 100 s/cc to 300 s/cc.

8. The electrode assembly according to any one of claims 1 to 7, wherein in a length direction of the electrode plate, the dimension of the bonding portion is less than or equal to the dimension of the exceeding portion.

9. The electrode assembly according to claim 8, wherein one side of the electrode plate is provided with at least two said bonding portions arranged at intervals along the length direction of the electrode plate, and a spacing space is formed between the two bonding portions, wherein
in the thickness direction of the electrode plate, the spacing space is also formed between two said exceeding portions on both sides of the electrode plate.

10. The electrode assembly according to claim 9, wherein in the length direction of the electrode plate, the dimension of the bonding portion is greater than or equal to 2 mm, and the dimension of the spacing space is in a range of 2 mm to 100 mm.

11. The electrode assembly according to any one of claims 1 to 10, wherein one side of the electrode plate body is provided with at least two said tab regions, and the at least two tab regions are arranged at intervals along the length direction of the electrode plate.

12. The electrode assembly according to any one of claims 1 to 10, wherein in the length direction of the electrode plate, the length of the tab region is the same as the length of the electrode plate body.

13. The electrode assembly according to claim 11 or 12, wherein in the width direction of the electrode plate, a ratio of the dimension of the exceeding portion to the dimension of the tab region is in a range of 1:3 to 2:3.

14. The electrode assembly according to any one of claims 11 to 13, wherein in the width direction of the electrode plate, a difference between the dimension of the tab region and the dimension of the exceeding portion is in a range of 1 mm to 40 mm.

15. The electrode assembly according to any one of claims 1 to 14, wherein a connection pattern is formed on the bonding portion, and the exceeding portions on the two opposite sides of the electrode plate are connected at the connection pattern.

16. The electrode assembly according to claim 15, wherein the connection pattern comprises a curved pattern or a polyline-shaped pattern.

17. The electrode assembly according to any one of claims 1 to 16, wherein the electrode plate is a positive electrode plate and/or a negative electrode plate.

18. A battery cell, comprising the electrode assembly according to any one of claims 1 to 17.

19. A battery, comprising the electrode assembly according to any one of claims 1 to 17; or the battery cell according to claim 18.

20. An electrical apparatus, comprising the electrode assembly according to any one of claims 1 to 17; or the battery cell according to claim 18; or the battery according to claim 19.
